# EUROPÄISCHE PATENTANMELDUNG

(11) **EP 1 249 405 A1**
(43) Veröffentlichungstag der Anmeldung: **16.10.2002**
(21) Anmeldenummer: 02001869.3
(22) Anmeldetag: 28.01.2002
(51) Int. Cl.: B65G 17/20, B65G 49/00, B65G 49/04, B65G 21/22

(54) **Verfahren und Vorrichtung zum Transport von Bauteilen in Fertigungslinien**

(30) Priorität: 11.04.2001 AT 5902001
(71) Anmelder: VA TECH Transport- und Montagesysteme GmbH & Co, 4031 Linz (AT)
(72) Erfinder: Schnitzhofer, Nikolaus, 4040 Linz (AT)
(74) Vertreter: VA TECH Patente GmbH & Co

(57) **Zusammenfassung**

Verfahren und Vorrichtung zum Transport von Bauteilen mittels Transportfahrzeuge (1), insbesondere Fahrzeukarosserien (3) im Fertigungslinien, bestehend aus einer Fertigungsstation und einer Förderstrecke, entlang der mit einer Mehrzahl von Transportfahrzeugen (1) gleicher Ausführung eine Mehrzahl von Trageinrichtungen (2) transportiert werden, wobei die Trageinrichtung (2) von einem Transportfahrzeug (1) in eine Übergabestation (4) übergebbar ist und vom selben oder einem anderen wieder aufnehmbar und weitertransportierbar ist.

## Beschreibung

Die gegenständliche Erfindung betrifft ein Verfahren zum Transport von Bauteilen mittels Transportfahrzeugen, insbesondere Fahrzeugkarosserien, in Fertigungslinien, bestehend aus zumindest einer Fertigungsstation und zumindest einer Förderstrecke, entlang der mit einer Mehrzahl von Transportfahrzeugen gleicher Ausführung eine Mehrzahl von Trageinrichtungen transportiert werden, sowie eine zugehörige Transportvorrichtung und der Anwendung dieser Transportvorrichtung in einer Fertigungsstraße für Fahrzeugkarosserien.

Bei Großserien werden in einer Fertigungsstraße hintereinander viele gleiche Fahrzeugkarosserien gefertigt. Ein Wechsel der verwendeten Transportfahrzeuge mit den Trageinrichtungen für die Fahrzeugkarosserien ist deshalb nur sehr selten notwendig und wird meistens nur beim Umstellen der Fertigungsstraße auf einen anderen Fahrzeugtyp durchgeführt. Bei Kleinserien, im Prototypenbau oder bei Sonderfertigungen ist so ein Wechsel jedoch oft durchzuführen, weshalb hier viele unterschiedliche Transportfahrzeuge verfügbar sein müssen, was sehr kostenintensiv ist. Insbesondere werden häufig auch Sonderanfertigungen während einer Großserie eingeschoben, was in der Regel den Einsatz anderer Transportfahrzeuge und/oder Trageinrichtungen bedingt. Darüber hinaus beansprucht ein Wechsel der Serie in der Regel auch sehr viel Zeit, in der nicht produziert werden kann.
In Fertigungsstraßen für Fahrzeugkarosserien, wie z.B. Montagelinien, ist es oft aus ergonomischen Gründen auch vorteilhaft, die Karosse seitlich aufzuschwenken um beispielsweise Montagearbeiten, wie z.B. das Verlegen von Bremsleitungen, an der Unterseite der Karosse durchzuführen. Dadurch können unangenehme Überkopfarbeiten weitestgehend vermieden werden. Solche Schwenkeinrichtungen sind in der Regel Teil der Transportfahrzeuge, mit denen die Karossen zwischen Fertigungsstationen transportiert werden. Es muss also jedes einzelne Transportfahrzeug für jeden Typ von Trageinrichtung mit einer solchen Schwenkeinrichtungen ausgestattet werden, was vor allem bei großen Fertigungsstraßen mit vielen Transportfahrzeugen hohe Kosten verursacht.

Die vorliegende Erfindung stellt sich deshalb die Aufgabe, eine Transportvorrichtung und ein Verfahren zum Transport von Fahrzeugkarosserien anzugeben die bei gleichbleibender Funktionalität eine wesentliche Kostenersparnis bringt.

Diese Aufgabe ist für das erfindungsgemäße Verfahren dadurch gelöst, dass Bauteile auf einer Trageinrichtung von einem Transportfahrzeug in eine Übergabestation übergeben werden und eine andere Trageinrichtung für gleiche oder andere Bauteile von einem Transportfahrzeug gleicher Ausführung wieder aufgenommen und weitertransportiert werden. Die Lösung für die erfindungsgemäße Schwenkstation ist dadurch gekennzeichnet, dass die Trageinrichtung von einem Transportfahrzeug in eine Übergabestation übergebbar ist und eine andere Trageinrichtung für gleiche oder andere Bauteile von einem Transportfahrzeug gleicher Ausführung wieder aufnehmbar und weitertransportierbar ist. Damit können Trageinrichtungen unterschiedlicher Bauart mit gleichen Transportfahrzeugen transportiert werden. Es werden somit nur mehr Transportfahrzeuge des gleichen Typs benötigt, wodurch die Transportvorrichtung konstruktiv einfacher und kostengünstiger wird.

In einer vorteilhaften Ausführungsform wird die Trageinrichtung mit den Bauteilen zur Übergabe auf die Schwenkstation abgesenkt. Als mögliche Alternative kann auch die Schwenkstation zur Übergabe zur Trageinrichtung mit den Bauteilen angehoben werden, oder die Trageinrichtung mit den Bauteilen mittels eines Roboters auf die Schwenkstation übergeben werden.
Je nach den gegebenen Verhältnissen kann die günstigste Variante, oder eine beliebige Kombination daraus, gewählt werden.

Der Schwenkvorgang kann besonders einfach durchgeführt werden, wenn das Transportfahrzeug während des Übergabevorganges angehalten wird. Alternativ kann das Transportfahrzeug während des Übergabevorganges auch weiterbewegt werden, insbesondere kann die Übergabestation während des Übergabevorganges auch mit dem Transportfahrzeug mitbewegt werden, wodurch man Taktzeit gewinnen kann, da die Transportfahrzeuge während des Übergabevorganges nicht angehalten werden müssen.

In einer weiteren sehr vorteilhaften Ausführungsform ist die Übergabestation als Schwenkstation ausgeführt, wodurch die Trageinrichtung um einen bestimmten Winkel verschwenkt und so weitertransportiert werden kann.
Bisher musste zum Verschwenken der Trageinrichtung jedes Transportfahrzeug mit einer Schwenkvorrichtung ausgestattet sein. Anstelle einer Schwenkeinrichtung an jedem Transportfahrzeug kommt man jetzt in der Regel mit zwei Schwenkeinrichtungen, eine zum Aufschwenken der Fahrzeugkarosserie und eine zum Rückschwenken in die normale Transportposition, aus. Somit ergeben sich beträchtliche zusätzliche Kostenersparnisse, vorallem in großen Montagelinien, mit vielen Transportfahrzeugen.
Zudem ergeben sich auch konstruktive Vorteile, da die Transportfahrzeuge ohne Schwenkeinrichtungen kleiner und leichter ausgeführt werden können, womit Platz in den Bearbeitungsstationen gewonnen werden kann.

Es ist ganz besonders vorteilhaft, wenn die Trageinrichtung um eine Horzitontalachse verschwenkt wird.

Ganz besonders vorteilhaft ist eine Ausführung bei der die Hebeeinrichtung am Transportfahrzeug vorgesehen ist. Damit hat man die Möglichkeit die jeweils günstigste Arbeitshöhe für verschiedene Arbeiten am Bauteil einzustellen.
Auf diese Weise sind bei der Ausführungsform als Schwenkstation, ein oder zwei verschiedene Aufschwenkwinkel oft ausreichend, wo bisher die Zugänglichkeit durch unterschiedliche Schwenkwinkel erreicht werden musste.

In einer sehr vorteilhaften Ausführungsform hat die Trageinrichtung und/oder das Transportfahrzeug für jede verwendete Trageinrichtung eigene Kupplungseinrichtungen, bzw. für jede mögliche Schwenklage eigene Kupplungseinrichtungen. Durch den Einsatz eines Kupplungsmechanismus können in der Übergabe- bzw. Schwenkstation auch Trageinrichtungen unterschiedlicher Bauart, beispielsweise für den Transport von Bauteilen unterschiedlicher KFZ Modelle, eingesetzt werden und unterschiedliche vorgegebene Aufschwenkwinkel eingestellt werden.

Die Kupplungseinrichtung kann entweder vom Transportfahrzeug betätigt werden, oder alternativ von der Übergabe- bzw. Schwenkstation, was kostengünstiger ist, da nicht jedes Transportfahrzeug mit dem Kupplungsbetätigungsmechanismus ausgestattet sein muss.

Ist die Übergabestation als Magazin für Trageinrichtungen ausgeführt, kann sehr einfach und rasch der Wechsel von Bauteilen durchgeführt werden. Dabei ist es sowohl möglich, die Trageinrichtung bereits im Magazin mit Bauteilen zu bestücken, als auch die Bestückung erst zu einem späteren Zeitpunkt, außerhalb des Magazins durchzuführen.

Sehr vorteilhaft wird die Transportvorrichtung in einer Fertigungsstraße für Fahrzeugkarosserien, beispielsweise eine Montagelinie, bestehend aus zumindest einer Fertigungsstation, zumindest einem Transportfahrzeug, zum Transportieren von auf Trageinrichtungen gehaltenen Fahrzeugkarosserien in die, aus den und/oder zwischen den Fertigungsstationen und zumindest einer Übergabestation zum Wechseln der Trageinrichtung, verwendet.
Für Montagelinien ist es sehr günstig, die Übergabestation als Schwenkstation auszuführen, da dann bestimmte Montagearbeiten einfacher durchgeführt werden können.

Ganz besonders günstig ist es, wenn die Fahrzeugkarosserien zwischen Fertigungsstationen im geschwenkten Zustand transportiert werden, da dann nicht nach jeder Fertigungsstation die Fahrzeugkarosserien in die normale Transportposition zurückgeschwenkt werden müssen, womit sowohl Taktzeit, als auch notwendige Schwenkstationen eingespart werden können.

Falls die Transportfahrzeuge mit Hebeeinrichtungen ausgestattet sind können die Fahrzeugkarosserien zwischen Fertigungsstationen und/oder im Montagebereich günstigerweise in der für den betreffenden Arbeitsgang günstigsten Arbeitshöhe transportiert werden. Ebenso ermöglicht diese besonders vorteilhafte Ausführung den Transport zwischen Montagebereiche und Fertigungsstationen in angehobenen Zustand, wobei der darunter liegende Bereich für Verkehrs-, Stell- und andere Arbeitsbereiche freigehalten wird und darüber hinaus keine personensicheren Ein- und Ausfahrten in die Schwenkstation bzw. Fertigungsstation notwendig sind.

Die Erfindung wird anhand der ein mögliches Ausführungsbeispiel zeigenden, beispielhaften, schematischen und nicht einschränkenden Figuren 1 bis 6 beschrieben. Dabei zeigt
Fig. 1 eine Seitenansicht einer erfindungsgemäßen als Schwenkstation ausgeführten Übergabestation vor dem Schwenken,
Fig. 2a und 2b eine Seitenansicht bzw. Aufsicht der Schwenkstation in der Übergabeposition,
Fig. 3 eine Seitenansicht der Schwenkstation während des Schwenkvorganges,
Fig. 4 eine Seitenansicht der Schwenkstation mit der geschwenkten Karosserie in der Übergabeposition,
Fig. 5 eine Aufsicht der Schwenkstation bei der Ausfahrt des Transportfahrzeuges aus der Schwenkstation und
Fig. 6 eine Seitenansicht des Transportfahrzeuges in Montageposition.

Die folgende Beschreibung bezieht sich auf eine mögliche Ausführungsform der Übergabestation als Schwenkstation. Selbstverständlich gelten die folgenden Erläuterungen, soweit wie anwendbar, auch für andere Ausführungsformen.

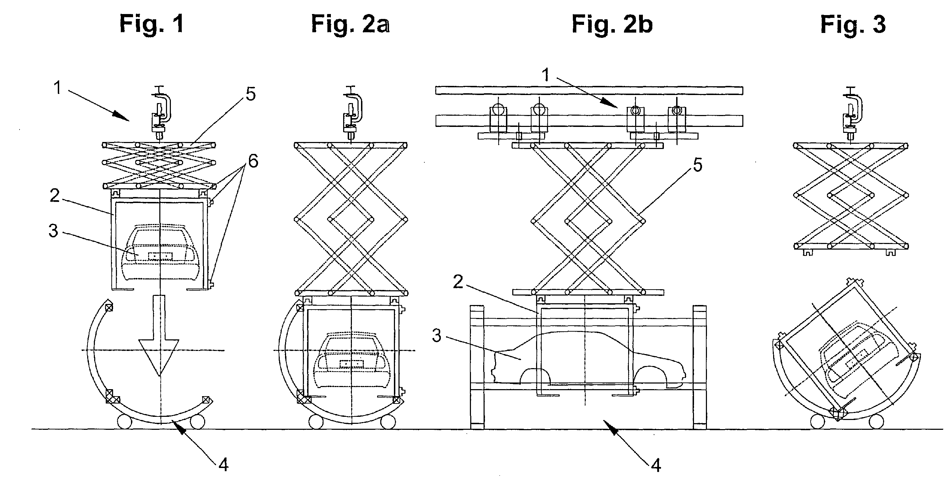

In Fig. 1 ist ein Transportfahrzeug 1, beispielsweise eine Elektrohängebahn, gezeigt, an der über eine Hebeeinrichtung 5 eine Trageinrichtung 2 für Fahrzeugkarosserien 3 befestigt ist. Die Hebeeinrichtung 5 kann dabei beliebig ausgeführt sein. Ebenso können natürlich ohne Einschränkung anstatt von Fahrzeugkarosserien auch beliebige andere Bauteile mit dem Transportfahrzeug 1 transportiert werden. Die Hebeeinrichtung 5 ist mittels einer beliebigen Kupplungseinrichtung 6 mit der Trageinrichtung 2 verbunden. Unterhalb der angehobenen Trageinrichtung 2 befindet sich eine Schwenkstation 4, die so positioniert ist, dass die Trageinrichtung 2 aufgenommen werden kann.
Selbstverständlich können auch andere Transportfahrzeuge 1, z.B. Bodenfahrzeuge, wie fahrerlose Transportsysteme, etc., erfindungsgemäß eingesetzt werden.

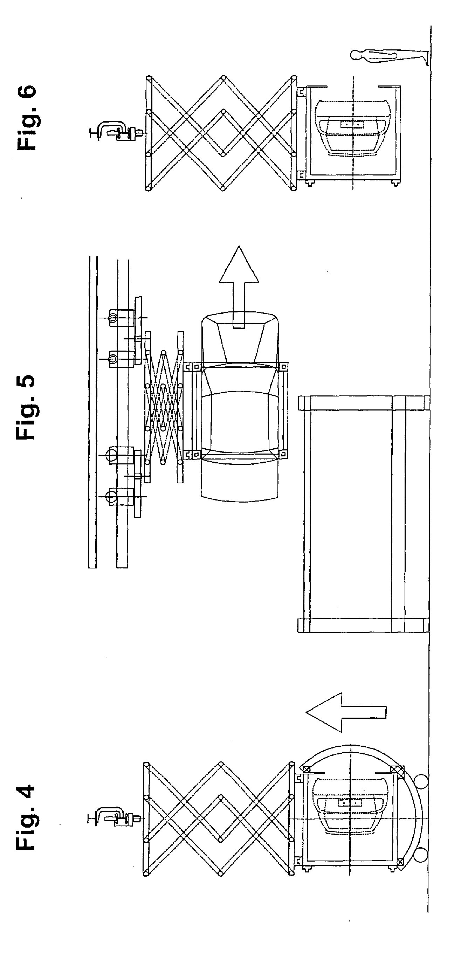

Das Transportfahrzeug 1 mit der die Fahrzeugkarosserie 3 enthaltenden Trageinrichtung 2 wird zum Schwenken über der Schwenkstation 4 angehalten und mittels der Hebeeinrichtung 5 in die Schwenkstation 4 abgesenkt (Fig. 2a und 2b). Zur Übergabe werden die Kupplungseinrichtungen 6 gelöst und die Hebeeinrichtung 5 eventuell ein Stück angehoben, um das freie Verschwenken möglich zu machen (Fig. 3). Dabei ist es gleichwertig, ob der Kupplungsmechanismus von der Schwenkstation 4 oder vom Transportfahrzeug 1 angesteuert und ausgelöst wird.
Die Trageinrichtung 2 mit der Fahrzeugkarosserie 3 wird mit der Schwenkstation 4 in eine gewünschte Position verschwenkt, z.B. ein Schwenkwinkel von 90° (Fig. 4). Für diese Position sind wieder Kupplungsvorrichtungen 6 vorhanden, damit die Trageinrichtung 2 wieder von der Hebeeinrichtung 5 aufgenommen werden kann. Insbesondere muss für jede mögliche Position eine entsprechende Kupplungsvorrichtung 6 vorhanden sein. Die geschwenkte Trageinrichtung 2 mit der Fahrzeugkarosserie 3 wird wieder angehoben und fährt im angehobenen Zustand aus der Schwenkstation 4 (Fig. 5). Im Montagebereich wird die geschwenkte Trageinrichtung 2 auf die entsprechende Arbeitshöhe abgesenkt, so dass notwendige Montagearbeiten, wie beispielsweise, das Verlegen von Bremsleitungen, in einer ergonomisch günstigen Position durchgeführt werden können (Fig. 6).

Im Anschluss an die Montage kann die Trageinrichtung 2 in analoger Weise wieder in die ursprüngliche Lage geschwenkt und weitertransportiert werden.

Selbstverständlich ist die oben beschriebene Ausführungsform nicht einschränkend, sondern es sind auch andere Varianten möglich, ohne den Grundgedanken der Erfindung zu verletzen.
Insbesondere ist es denkbar, die Trageinrichtung 2 ohne Hebeeinrichtung 5 am Transportfahrzeug 1 zu befestigen und die Übergabestation zur Übergabe der Trageinrichtung anzuheben bzw. abzusenken.
Ebenso ist es denkbar, dass das Transportfahrzeug 1 während des Übergabevorganges nicht angehalten wird, sondern die Übergabestation mit dem Transportfahrzeug 1 mitbewegt wird.
Im Fall, dass das Transportfahrzeug 1 über eine eigene Hebeeinrichtung 5 verfügt, ist es vom jeweiligen Einsatzfall abhängig, ob die Trageinrichtung 2 in angehobenen oder abgesenkten Zustand transportiert wird.

Weiters ist es auch denkbar, die Übergabestation als Magazin für Trageinrichtungen auszuführen, in dem mehrere gleiche oder verschiedene Trageinrichtungen 2 enthalten sind und so bei Bedarf ausgetauscht werden können. Dabei ist es unerheblich, ob die Trageinrichtung im Magazin bereits mit Bauteilen bestückt ist, oder ob die Bestückung erst zu einem späteren Zeitpunkt, außerhalb des Magazins erfolgt.

Durch die vorhandenen Kupplungseinrichtungen 6 ist es insbesondere auch möglich, nur einen einzigen Typ von Transportfahrzeug 1, in einer einzigen Ausführungsart für alle verwendeten Trageinrichtungen 2 einzusetzen.

## Patentansprüche

1. Verfahren zum Transport von Bauteilen mittels Transportfahrzeugen, insbesondere Fahrzeugkarosserien, in Fertigungslinien, bestehend aus zumindest einer Fertigungsstation und zumindest einer Förderstrecke, entlang der mit einer Mehrzahl von Transportfahrzeugen gleicher Ausführung eine Mehrzahl von Trageinrichtungen transportiert werden, **dadurch gekennzeichnet, dass** Bauteile auf der Trageinrichtung von einem Transportfahrzeug in eine Übergabestation übergeben werden und die gleiche oder eine andere Trageinrichtung für gleiche oder andere Bauteile vom selben oder einem anderen Transportfahrzeug gleicher Ausführung wieder aufgenommen und weitertransportiert werden.

2. Verfahren nach Anspruch 1, **dadurch gekennzeichnet, dass** die Trageinrichtung mit den Bauteilen zur Übergabe auf die Übergabestation abgesenkt wird.

3. Verfahren nach Anspruch 1 und/oder 2, **dadurch gekennzeichnet, dass** die Übergabestation zur Übergabe zur Trageinrichtung mit den Bauteilen angehoben wird.

4. Verfahren nach einem der Ansprüche 1 bis 3, **dadurch gekennzeichnet, dass** die Trageinrichtung mit den Bauteilen mittels eines Roboters auf die Übergabestation übergeben wird und/oder die Trageinrichtung mit den Bauteilen mittels eines Roboters von der Übergabestation an das Transportfahrzeug übergeben wird.

5. Verfahren nach einem der Ansprüche 1 bis 4, **dadurch gekennzeichnet, dass** das Transportfahrzeug während des Übergabevorganges angehalten wird.

6. Verfahren nach einem der Ansprüche 1 bis 5, **dadurch gekennzeichnet, dass** das Transportfahrzeug während des Übergabevorganges weiterbewegt wird.

7. Verfahren nach einem der Ansprüche 1 bis 6, **dadurch gekennzeichnet, dass** die Übergabestation während des Übergabevorganges mit dem Transportfahrzeug mitbewegt wird.

8. Verfahren nach einem der Ansprüche 1 bis 7, **dadurch gekennzeichnet, dass** die Trageinrichtung mit den Bauteilen in der Übergabestation um einen vorgegebenen Schwenkwinkel verschwenkt wird und die Trageinrichtung in dieser verschwenkten Lage wieder aufgenommen und weitertransportiert wird.

9. Verfahren nach Anspruch 8, **dadurch gekennzeichnet, dass** die Trageinrichtung um eine im Wesentlichen horizontale Achse verschwenkt wird.

10. Transportvorrichtung für Bauteile mittels Transportfahrzeuge, insbesondere Fahrzeugkarosserien in Fertigungslinien, bestehend aus zumindest einer Fertigungsstation und zumindest einer Förderstrecke, entlang der mit einer Mehrzahl von Transportfahrzeugen gleicher Ausführung eine Mehrzahl von Trageinrichtungen transportiert werden, wobei die Bauteile auf den Trageinrichtungen angeordnet sind, **dadurch gekennzeichnet, dass** die Trageinrichtung von einem Transportfahrzeug in eine Übergabestation übergebbar ist und die gleiche oder eine andere Trageinrichtung für gleiche oder andere Bauteile vom selben oder einem anderen Transportfahrzeug gleicher Ausführung wieder aufnehmbar und weitertransportierbar ist.

11. Transportvorrichtung nach Anspruch 10, **dadurch gekennzeichnet, dass** an der Trageinrichtung und/oder dem Transportfahrzeug für verschiedene Trageinrichtungen gleiche Kupplungseinrichtungen vorgesehen sind.

12. Transportvorrichtung nach Anspruch 11, **dadurch gekennzeichnet, dass** die Kupplungseinrichtung vom Transportfahrzeug betätigbar ist.

13. Transportvorrichtung nach Anspruch 11, **dadurch gekennzeichnet, dass** die Kupplungseinrichtung von der Übergabestation betätigbar ist.

14. Transportvorrichtung nach einem der Ansprüche 10 bis 13, **dadurch gekennzeichnet, dass** die Trageinrichtung mit den Bauteilen in die Übergabestation absenkbar ist.

15. Transportvorrichtung nach Anspruch 14, **dadurch gekennzeichnet, dass** die Trageinrichtung mittels einer am Transportfahrzeug befindlichen Hebeeinrichtung absenkbar ist.

16. Transportvorrichtung nach einem der Ansprüche 10 bis 15, **dadurch gekennzeichnet, dass** die Übergabestation zur Trageinrichtung mit den Bauteilen anhebbar ist.

17. Transportvorrichtung nach einem der Ansprüche 10 bis 16, **dadurch gekennzeichnet, dass** die Trageinrichtung mit den Bauteilen mittels eines Roboters vom Transportfahrzeug an die Übergabestation und/oder von der Übergabestation an das Transportfahrzeug übergebbar ist.

18. Transportvorrichtung nach einem der Ansprüche 10 bis 17, **dadurch gekennzeichnet, dass** die Übergabestation in der Fertigungslinie stationär angeordnet ist.

19. Transportvorrichtung nach einem der Ansprüche 10 bis 18, **dadurch gekennzeichnet, dass** die Übergabestation während des Übergabevorganges mit dem Transportfahrzeug mitbewegbar ist.

20. Transportvorrichtung nach einem der Ansprüche 10 bis 19, **dadurch gekennzeichnet, dass** die Übergabestation als Magazin für Trageinrichtungen ausgeführt ist.

21. Transportvorrichtung nach einem der Ansprüche 10 bis 20, **dadurch gekennzeichnet, dass** die Übergabestation als Schwenkstation ausgeführt ist und die Trageinrichtung um einen vorgegebenen Winkel verschwenkbar und in dieser verschwenkten Lage an das Transportfahrzeug übergebbar und weitertransportierbar ist.

22. Transportvorrichtung nach Anspruch 21, **dadurch gekennzeichnet, dass** an der Trageinrichtung und/oder dem Transportfahrzeug für verschiedene mögliche Schwenklagen gleiche Kupplungseinrichtungen vorgesehen sind.

23. Transportvorrichtung nach Anspruch 20 oder 22, **dadurch gekennzeichnet, dass** die Trageinrichtung um eine im Wesentlichen horizontale Achse verschwenkbar ist.

24. Verwendung der Transportvorrichtung nach einem der Ansprüche 10 bis 23 in einer Fertigungsstraße für Fahrzeugkarosserien, beispielsweise eine Montagelinie, bestehend aus zumindest einer Fertigungsstation, zumindest einem Transportfahrzeug, zum Transportieren von auf Trageinrichtungen gehaltenen Fahrzeugkarosserien in die, aus den und/oder zwischen den Fertigungsstationen und zumindest einer Übergabestation zum Wechseln der Trageinrichtung.

25. Verwendung nach Anspruch 24, **dadurch gekennzeichnet, dass** zumindest eine Übergabestation als Schwenkstation zum Schwenken der Fahrzeugkarosserien ausgeführt ist.

26. Verwendung nach Anspruch 25, **dadurch gekennzeichnet, dass** die Fahrzeugkarosserien zwischen Fertigungsstationen und/oder zwischen bzw. im Montagebereich im geschwenkten Zustand transportierbar sind.

27. Verwendung nach einem der Ansprüche 24 bis 26, **dadurch gekennzeichnet, dass** die Fahrzeugkarosserien zwischen Fertigungsstationen und/oder zwischen bzw. im Montagebereich im angehobenen Zustand transportierbar sind.

28. Verwendung nach einem der Ansprüche 24 bis 27, **dadurch gekennzeichnet, dass** die Fahrzeugkarosserien zwischen Fertigungsstationen und/oder zwischen bzw. im Montagebereich in Arbeitshöhe transportierbar sind.
